# EUROPEAN PATENT APPLICATION

(11) **EP 3 026 919 A1**
(43) Date of publication of application: **01.06.2016**
(21) Application number: 13890017.0
(22) Date of filing: 22.07.2013
(51) Int. Cl.: H04N 21/238, H04N 21/431

(54) **IMAGE GENERATION SYSTEM AND IMAGE GENERATION-PURPOSE PROGRAM**

(71) Applicant: Fuzz Inc., Shinagawa-ku Tokyo 141-0031 (JP)
(72) Inventor: TSUSHIMA, Tadashi, Tokyo 141-0031 (JP); KASHITANI, Yoshiki, Tokyo 141-0031 (JP)
(74) Representative: Vossius & Partner Patentanwälte Rechtsanwälte mbB
(86) International application number: PCT/JP2013/069799
(87) International publication number: WO 2015/011762

(57) **Abstract**

When a process of generating a displayed image to be displayed on a terminal (100) is performed only by use of a server (200), a communication speed at which a server-side image (displayed image) is transmitted from the server (200) to the terminal (100) is stored, as a history, into a communication history storage unit (30). When the performance of the process of generating the displayed image is distributed between the terminal (100) and the server (200), the data volume of the server-side image generated at the server (200) is adjusted on the basis of the history of the communication speed stored in the communication history storage unit (30). In this way, the communication time can be prevented from becoming long, and the latency time required at the terminal (100) for synchronizing the terminal-side image with the server-side image and performing an image combination thereof can be possibly shortened.

## Description

### TECHNICAL FIELD

The present invention relates to an image generation system and an image generation-purpose program, and more particularly, is suitably used for an image generation system serving to perform an image generation process by distribution through a terminal and a server and to synthesize and display an image generated on the terminal and an image generated on the server in the terminal.

### BACKGROUND ART

Conventionally, there is provided a Cloud gaming service for operating a game on a server and streaming delivering a game screen and a sound to a terminal via a line. In the Cloud gaming service, operating information input on a terminal side is transmitted to the server and an image process such as a calculation or rendering based thereon is executed on the server side. Then, a game screen or a sound obtained as a result of the execution is streaming delivered to the terminal.

According to the Cloud gaming service, a terminal on a player side does not require an environment such as a storage medium for storing a game program and data and a high graphic processing performance. For this reason, by preparing these high performance operating environments on the server side, it is possible to comfortably execute a game at various terminals other than a private game machine or a high-end personal computer.

In the case of the Cloud gaming service, however, a data volume of an image to be delivered from the server to the terminal is increased. For this reason, in the case in which a line traffic is increased, a communication is delayed. Therefore, a response time is increased until image data on a result of a calculation corresponding to some operation performed by a user through the terminal is returned from the server and is displayed on a screen after the user performs the operation. Thus, there is a problem in that the user cannot enjoy a game comfortably.

As one means for solving the problem, it is supposed to carry out image rendering by distribution through the terminal and the server and to synthesize an image generated at the terminal and an image delivered from the server and display the synthesized image. By generating at least a part of images on the terminal side, it is possible to decrease a data volume of an image to be generated on the server side, that is, a data volume of an image to be delivered from the server to the terminal.

The technique itself for synthesizing and displaying an image generated on a server and an image generated on a terminal is conventionally known (for example, see Patent Documents 1 and 2).
Patent Document 1 : Japanese Laid-Open Patent Publication No. 1996-69545
Patent Document 2 : Japanese Laid-Open Patent Publication No. 2008-67290

Referring to the technique described in the Patent Document 1, a background image is generated in a drawing engine of a server and is encoded in a video encoding device, and the encoded image is transferred to a user terminal through a network. The user terminal decodes the image by a video decoding device and synthesizes the decoded image with a near view image generated in a drawing device by an image synthesizing device, and displays the synthesized image on a display.

Referring to the technique described in the Patent Document 2, an image management server device retrieves high correlation image data having a high correlation with image data corresponding to metadata transmitted from a client terminal out of registered image data stored in an image data storage unit, and transmits the high correlation image data obtained as a result of the retrieval to the client terminal through a network. The client terminal generates synthesized image data by using the high correlation image data received from the image management server device and the image data corresponding to the meta data transmitted to the image management server device.

### DISCLOSURE OF THE INVENTION

In the case in which a process for generating an image to be displayed on a terminal is performed by distribution through the terminal and a server, however, a process time required for generating an image on the terminal side is different from a process time required for generating an image on the server side and delivering the generated image to the terminal. Therefore, it is necessary to synchronously synthesize images. In order to take synchronization, it is necessary to conform to either of the processing time on the terminal side (an image generation time) and the processing time on the server side (an image generation time + a communication time) which is later.

For this reason, even if a part of the images are completely generated on the terminal side, for example, a certain latency time occurs before the images are synthesized on the terminal if the residual images are not delivered from the server. The latency time produces a problem in that a response time is increased till display of the synthesized image on a screen and response performance of the screen display cannot be enhanced to such a sufficient degree as to cause the user to enjoy a game comfortably.

The present invention has been made to solve the problem and has an object to enhance response performance of screen display by shortening a latency time on a terminal side which is required for synchronously performing image synthesis in the case in which a process for generating a display image to be displayed on a terminal is carried out by distribution through the terminal and a server.

In order to solve the problem, in the present invention, it is decided whether a process for generating a display image to be displayed on a terminal is performed by distribution through a terminal and a server, and control is carried out to execute either a distribution process for synthesizing a terminal-side image and a server-side image to generate a display image or a single process for generating the server-side image itself as the display image depending on a result of the decision. In the execution of the single process, a communication speed in transmission of the server-side image from the server to the terminal is stored as a history in a communication history storage unit. In the execution of the distribution process, moreover, a data volume of the server-side image to be generated by the server is adjusted based on the history of the communication speed stored in the communication history storage unit.

According to the present invention having the structure described above, in the case in which the process for generating the display image to be displayed on the terminal is performed by distribution through the terminal and the server, a data volume of a server-side image is adjusted so as not to increase the communication time based on the history of the communication speed when the server-side image is transmitted to the terminal in the past. Consequently, it is possible to shorten the latency time as greatly as possible at the terminal side required for synchronously synthesizing the terminal-side image and the server-side image. Thus, it is possible to enhance response performance of screen display.

### BRIEF DESCRIPTION OF THE DRAWINGS

FIG. 1 is a block diagram showing an example of a network structure of an image generation system according to the present embodiment.
FIG. 2 is a block diagram showing an example of a functional structure of a terminal according to the present embodiment.
FIG. 3 is a block diagram showing an example of a functional structure of a server according to the present embodiment.
FIG. 4 is a flowchart showing an example of an operation of an image generation system according to the present embodiment.

### BEST MODE FOR CARRYING OUT THE INVENTION

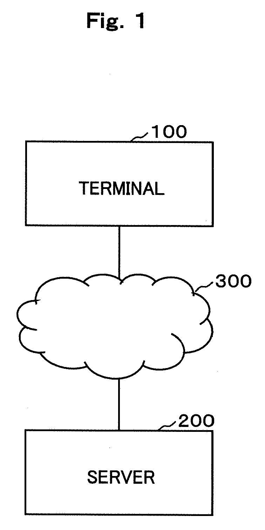

An embodiment according to the present invention will be described below with reference to the drawings. FIG. 1 is a block diagram showing an example of a network structure of an image generation system according to the present embodiment.

As shown in FIG. 1, the image generation system according to the present embodiment includes a terminal 100 to be used by a player of Cloud gaming, and a server 200 for streaming delivering a game screen or a sound which is to be used for the Cloud gaming. The terminal 100 and the server 200 are configured to be connectable to each other through a communication network such as internet 300.

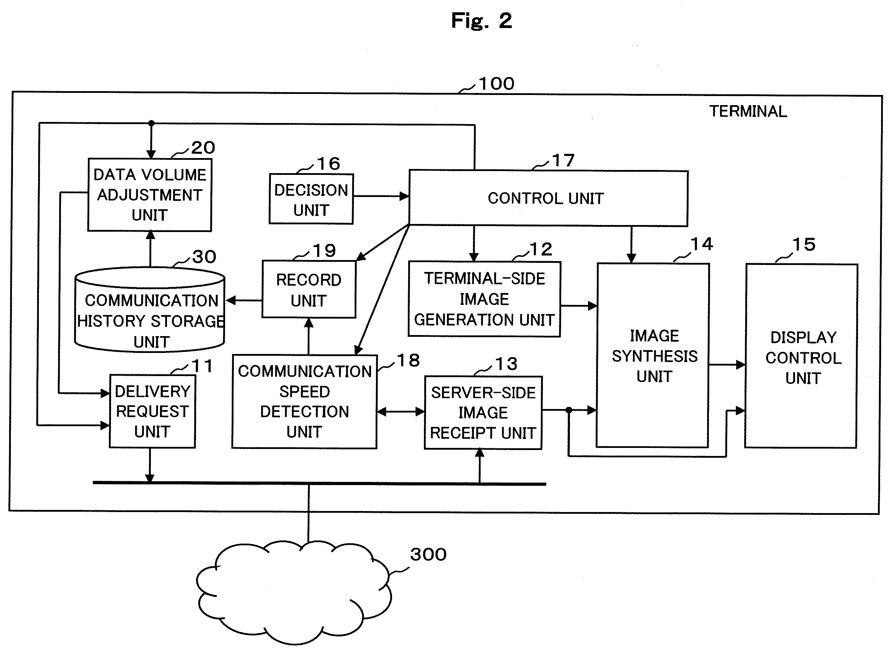

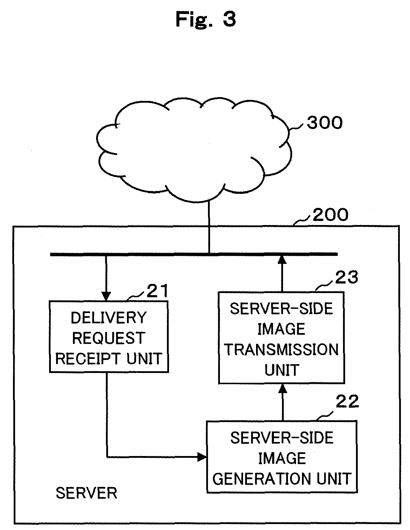

FIG. 2 is a block diagram showing an example of a functional structure of the terminal 100 according to the present embodiment. Moreover, FIG. 3 is a block diagram showing an example of a functional structure of the server 200 according to the present embodiment.

As shown in FIG. 2, the terminal 100 according to the present embodiment includes, as a functional structure thereof, a delivery request unit 11, a terminal-side image generation unit 12, a server-side image receipt unit 13, an image synthesis unit 14, a display control unit 15, a decision unit 16 and a control unit 17, a communication speed detection unit 18, a record unit 19, a data volume adjustment unit 20, and a communication history storage unit 30. As shown in FIG. 3, moreover, the server 200 according to the present embodiment includes, as a functional structure thereof, a delivery request receipt unit 21, a server-side image generation unit 22, and a server-side image transmission unit 23.

Functions of the respective blocks 11 to 20 in the terminal 100 are implemented by an image generation-purpose program incorporated into a game application (hereinafter referred to as a terminal-side game application) to be previously installed into the terminal 100, for example. In other words, the respective blocks 11 to 20 actually include a CPU, an RAM, an ROM and the like in a computer and are implemented by an operation of an image generation-purpose program stored in a recording medium such as the RAM, the ROM, a hard disk or a semiconductor memory.

On the other hand, functions of the respective blocks 21 to 23 in the server 200 are implemented by an image generation-purpose program incorporated into a game application (hereinafter referred to as a server-side game application) which is previously installed into the server 200, for example. In other words, the respective blocks 21 to 23 actually include a CPU, an RAM, an ROM and the like in a computer and are implemented by an operation of an image generation-purpose program stored in a recording medium such as the RAM, the ROM, a hard disk or a semiconductor memory.

In the present embodiment, the Cloud gaming is executed in cooperation of the terminal-side game application and the server-side game application. During the execution of the Cloud gaming, the image generation system according to the present embodiment serves to perform a process for generating a display image to be displayed on the terminal 100 by distribution through the terminal 100 and the server 200 and to synthesize an image generated on the terminal 100 (which will be hereinafter referred to as a terminal-side image) and an image generated on the server 200 (which will be hereinafter referred to as a server-side image) and display the synthesized image in the terminal 100. In the present embodiment, the image may be a moving image or a static image.

A mechanism for image synthesis will be described below in detail. The delivery request unit 11 of the terminal 100 gives the server 200 a request for delivering an image to be displayed on a screen of the terminal 100 depending on a state of progress of the Cloud gaming. When there is generated a scene for switching the screen depending on a game operation by a player or when there is generated a scene for causing a program to automatically switch the screen depending on a result of execution of the game, typically, the delivery request unit 11 gives the server 200 a request for delivering a necessary image.

The terminal-side image generation unit 12 performs a process for generating a terminal-side image as necessary when the delivery request unit 11 gives the server 200 a request for delivering an image. "As necessary" means the case in which the terminal-side image and the server-side image are synthesized and the synthesized image is displayed in the terminal 100. In the present embodiment, the image synthesis is not always carried out but a display image is constituted by only the server-side image received from the server 200 in some cases. Control as to whether to perform the image synthesis is carried out by the decision unit 16 and the control unit 17, which will be described later.

Herein, the terminal 100 does not have a high performance graphic processing environment like the server 200. For this reason, a letter image which does not require very high quality is generated by the terminal-side image generation unit 12. On the other hand, in the server 200 having the high performance graphic processing environment, a body image other than the letter image, that is, an image such as a background or a game character which is required to have high quality is generated by the server-side image generation unit 22.

The server-side image receipt unit 13 receives, from the server 200, a server-side image generated by the server-side image generation unit 22. The image synthesis unit 14 synthesizes a terminal-side image generated by the terminal-side image generation unit 12 and a server-side image received by the server-side image receipt unit 13, thereby generating a display image.

A timing for completing the process for generating the terminal-side image by the terminal-side image generation unit 12 is not always coincident with a timing for completing the process for receiving the server-side image generated and transmitted by the server 200 through the server-side image receipt unit 13. Accordingly, the image synthesis unit 14 needs to synchronously synthesize the terminal-side image and the server-side image with each other.

Although the server 200 has the high performance graphic processing environment, it generates and transmits the server-side image which has a higher quality level and a larger data volume than the terminal-side image. In many cases, therefore, the image synthesis unit 14 waits to carry out the image synthesis while the server-side image is received by the server-side image receipt unit 13 after the terminal-side image is generated by the terminal-side image generation unit 12.

In the present embodiment, however, the data volume of the server-side image is adjusted to shorten a latency time for synchronization as greatly as possible, which will be described later. Consequently, the display image is switched smoothly so that a player can enjoy a game comfortably without feeling stress.

The display control unit 15 displays a display image on the screen of the terminal 100. As described above, the display image may be constituted by synthesizing the terminal-side image generated by the terminal-side image generation unit 12 and the server-side image received by the server-side image receipt unit 13 or may be constituted by only the server-side image received by the server-side image receipt unit 13.

The decision unit 16 decides whether the process for generating a display image is performed by distribution through the terminal 100 and the server 200. In other words, the decision unit 16 decides whether the terminal-side image and the server-side image are synthesized to generate a display image or whether the display image is generated by only the server-side image.

In the present embodiment, the decision unit 16 decides whether the process for generating a display image is to be performed by distribution through the terminal 100 and the server 200 depending on whether a letter image is included in the display image to be generated from now. In other words, it is decided that the distribution process for the image generation is to be performed if the letter image is included in the display image, and that the distribution process for the image generation is not to be performed if the letter image is not included.

It is possible to decide, based on information incorporated previously in the terminal-side game application, whether the letter image is included in the display image to be generated from now depending on the state of progress of the game, for example. Alternatively, it is also possible to make a decision by separating an executive instruction related to generation of a letter image from an executive instruction related to generation of a body image other than the letter image to build the terminal-side game application and confirming whether this executive instruction form is obtained. The decision method described above is only illustrative and the present invention is not restricted to this way.

The control unit 17 controls to execute either a distribution process or a single process depending on a result of the decision made by the decision unit 16. The distribution process serves to operate the terminal-side image generation unit 12 and the image synthesis unit 14 to synthesize the terminal-side image and the server-side image, thereby generating a display image. Moreover, the single process serves to generate the display image from only the server-side image received by the server-side image receipt unit 13 without operating the terminal-side image generation unit 12 and the image synthesis unit 14. Furthermore, the control unit 17 controls the operations of the delivery request unit 11, the communication speed detection unit 18, the record unit 19 and the data volume adjustment unit 20 depending on the result of the decision made by the decision unit 16.

The communication speed detection unit 18 detects a communication speed of the internet 300 for connecting the terminal 100 and the server 200 to each other. For example, the communication speed detecting unit 18 detects a communication speed in receipt of the server-side image from the server 200 by the server-side image receipt unit 13. It is sufficient to detect the communication speed in at least execution of the single process for generating, as the display image, the server-side image received by the server-side image receipt unit 13.

The record unit 19 stores the communication speed detected by the communication speed detection unit 18 as a history in the communication history storage unit 30 when executing the single process under control of the control unit 17. In other words, the communication history storage unit 30 stores, as a history, a communication speed in the execution of the single process to transmit the server-side image from the server 200 to the terminal 100.

The data volume adjustment unit 20 determines a quality level of the server-side image to be generated by the server 200 based on the history of the communication speed stored in the communication history storage unit 30, thereby adjusting the data volume of the server-side image in the execution of the distribution process. More specifically, the data volume adjustment unit 20 adjusts a data volume in which a required processing time in the transmission of the server-side image at the lowest one of the communication speeds stored in the communication history storage unit 30 is within a predetermined time (a time-out time).

Herein, the time-out time is a time required for switching the display image without a player feeling stress, and is predetermined every type of the display image to be generated depending on the state of progress of the game. The time-out time is previously incorporated as information in the program of the terminal-side game application, for example. Alternatively, it is also possible to have table information in addition to the program and to store, in the table information, the time-out time for each type of the display image.

In the case in which the communication speed is expressed in a bit per second (bps) and the time-out time is set to be one second, the data volume adjustment unit 20 adjusts the quality level of the server-side image to have such a data volume as to complete the image delivery within one second. The quality level of the server-side image is specified depending on an image compression rate, for example. The data volume adjustment unit 20 notifies the delivery request unit 11 of the quality level of the server-side image thus adjusted. The delivery request unit 11 notifies the server 200 of the quality level together with the image delivery request described above.

In fact, a time required from the transmission of the delivery request of the image to the server 200 by the delivery request unit 11 to the transmission of the server-side image as a response is a total of the time required for generating the server-side image and the time required for transmitting the server-side image. Therefore, it is preferable to adjust the data volume (quality level) of the server-side image in such a manner that the total time is within the time-out time.

The delivery request receipt unit 21 of the server 200 receives an image delivery request transmitted from the terminal 100. The server-side image generation unit 22 performs the process for generating a server-side image upon receipt of the image delivery request by the delivery request receipt unit 21. The server-side image transmission unit 23 transmits, to the terminal 100, the server-side image generated by the server-side image generation unit 22.

Herein, the server-side image generation unit 22 generates a server-side image in accordance with a quality level when it is notified of the quality level together with the image delivery request. On the other hand, when the notice of the quality level is not given, the server side image generation unit 22 generates the server-side image on a predetermined quality level (a level to achieve high image quality), for example. Alternatively, it is also possible to generate the server-side image on a quality level set to have such a data volume that a processing time required for detecting a communication speed in the receipt of the image delivery request at the server 200 side and transmitting the server-side image from the server 200 to the terminal 100 at the communication speed is within a time-out time.

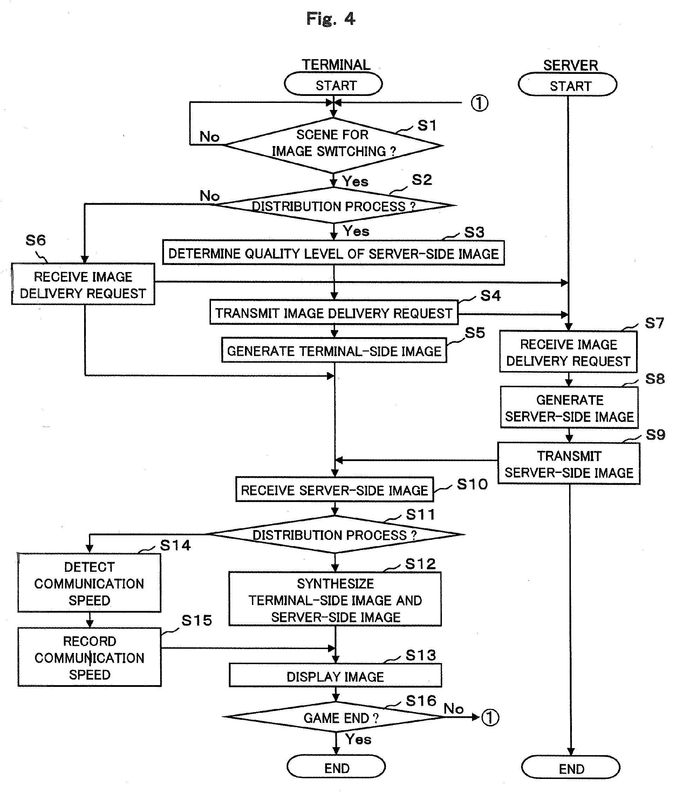

FIG. 4 is a flowchart showing an example of an operation of the image generation system according to the present embodiment having the structure described above. The flowchart shown in FIG. 4 is started when the terminal side game application installed in the terminal 100 is activated.

First of all, the decision unit 16 of the terminal 100 decides whether a scene for switching a display image occurs depending on the state of progress of the Cloud gaming (Step S1). If the scene for image switching does not occur, the progress of the game is exactly continued and it is consecutively decided whether the scene for switching an image occurs.

On the other hand, when deciding that the scene for switching a display image occurs, the decision unit 16 decides whether the process for generating a display image is performed by distribution through the terminal 100 and the server 200 depending on whether a letter image is included in a display image to be generated from now (Step S2). Herein, if the decision unit 16 decides that the distribution process is performed, a notice of the decision is given to the control unit 17.

The data volume adjustment unit 20 determines a quality level of the server-side image to be generated in the server 200 (a body image other than the letter image) based on the history of the communication speed stored in the communication history storage unit 30 under control of the control unit 17 (Step S3). More specifically, the data volume adjustment unit 20 determines the quality level of the server-side image to have such a data volume that a processing time required for transmitting the server-side image from the server 200 to the terminal 100 at the lowest one of the communication speeds stored in the communication history storage unit 30 is within a time-out time.

Then, the delivery request unit 11 transmits an image delivery request to the server 200 together with information about the quality level determined by the data volume adjustment unit 20 (Step S4). Furthermore, the terminal-side image generation unit 12 performs the process for generating a terminal-side image (a letter image) under the control of the control unit 17 (Step S5).

On the other hand, if the decision unit 16 decides, in the Step S2, that the letter image is not included in the display image to be generated from now and the server 200 singly performs the process for generating a display image, the delivery request unit 11 transmits an image delivery request to the server 200 without the information about the quality level related to the server-side image (Step S6).

The delivery request receipt unit 21 of the server 200 receives the image delivery request transmitted from the terminal 100 in the Step S4 or the Step S6 (Step S7). The server-side image generation unit 22 performs the process for generating a server-side image upon receipt of the image delivery request (Step S8). At this time, the server-side image generation unit 22 generates the server-side image in accordance with the quality level when a notice of the information about the quality level is given together with the image delivery request. Then, the server-side image transmission unit 23 transmits, to the terminal 100, the server-side image generated by the server-side image generation unit 22 (Step S9).

In the terminal 100, the server-side image transmitted by the server-side image transmission unit 23 is received by the server-side image receipt unit 13 (Step S10). The decision unit 16 decides whether a distribution process is being executed (Step S11). If the distribution process is being executed, the image synthesis unit 14 synthesizes the terminal-side image generated by the terminal-side image generation unit 12 in the Step S5 and the server-side image received by the server-side image receipt unit 13 in the Step S10, thereby generating a display image (Step S12). Thereafter, the display control unit 15 displays the display image generated by the image synthesis unit 14 on the screen of the terminal 100 (Step S13).

On the other hand, if the decision unit 16 decides that the distribution process is not being executed in the Step S11, that is, a single process is being executed, the communication speed detection unit 18 detects a communication speed in the receipt of the server-side image from the server 200 by the server-side image receipt unit 13 under the control of the control unit 17 (Step S14). Subsequently, the record unit 19 stores the communication speed detected by the communication speed detection unit 18 as a history in the communication history storage unit 30 (Step S15). Then, the display control unit 15 displays, as a display image, the server-side image itself received by the server-side image receipt unit 13 in the Step S10 on the screen of the terminal 100 (Step S13).

Thereafter, the decision unit 16 decides whether the game is ended (Step S16). In other words, the decision unit 16 decides whether the game is over depending on the progress of the game or an instruction for ending the game is given by a user's operation. If the game is not ended, the process is returned to the Step S1. On the other hand, if the game is ended, the process of the flowchart shown in FIG. 4 is ended.

As described above in detail, in the present embodiment, when it is necessary to switch the image to be displayed on the terminal 100 depending on the progress of the game, it is decided whether the process for generating the display image is performed by distribution through the terminal 100 and the server 200 and whether the process is singly carried out in the server 200. If the single process is performed, the communication speed in the receipt of the server-side image in the terminal 100 is detected and stored as a history in the communication history storage unit 30. On the other hand, if the distribution process is performed, the data volume (quality level) of the server-side image to be generated in the server 200 is adjusted based on the history of the communication speed stored in the communication history storage unit 30.

According to the present embodiment thus configured, in the case in which the process for generating the display image to be displayed on the terminal 100 is performed by distribution through the terminal 100 and the server 200, the data volume of the server-side image is adjusted as so not to increase a communication time based on the history of the communication speed in the transmission of the server-side image from the server 200 to the terminal 100 in the past. Consequently, it is possible to shorten a latency time on the terminal 100 side required for synchronously synthesizing the terminal-side image and the server-side image as greatly as possible. Thus, it is possible to enhance response performance of screen display in the switching of the display image.

Although the description has been given to the example in which the terminal-side game application is previously installed into the terminal 100 in the embodiment, the present invention is not restricted thereto. For example, the terminal-side game application may be downloaded from the server 200 into the terminal 100 in the activation of the game. Moreover, it is also possible to download a script describing a necessary executive instruction for image display on that scene from the server 200 to the terminal 100 every scene for switching the display image depending on the progress of the game.

Although the description has been given to the example in which the terminal 100 is provided with the communication speed detection unit 18, the record unit 19, the data volume adjustment unit 20 and the communication history storage unit 30 in the embodiment, moreover, these may be provided in the server 200. In this case, the delivery request unit 11 transmits the image delivery request to the server 200 together with a notice for giving the result of the decision made by the decision unit 16.

Although the description has been given to the example in which the decision unit 16 and the control unit 17 are provided in the terminal 100 in the embodiment, furthermore, these may be provided in the server 200. In this case, when the scene for switching the display image occurs depending on the progress of the game, the decision unit 16 of the server 200 decides whether the distribution process is performed. If the distribution process is carried out, the terminal 100 is notified of the decision. Then, the generation and transmission of the server-side image in the server 200 and the generation of the terminal-side image in the terminal 100 are performed concurrently, and the process for synthesizing both of the images is performed in the terminal 100.

In the embodiment, moreover, the data volume of the server-side image is adjusted in such a manner that the processing time required for transmitting the server-side image at the lowest one of the communication speeds stored in the communication history storage unit 30 is within the time-out time in the execution of the distribution process. If an actual communication speed at that time is further lower than the lowest communication speed in the past, however, the server-side image cannot be transmitted within the time-out time.

In this case, only the terminal side image may be displayed when the time-out time is reached in the terminal 100. The reason is that the following is considered. More specifically, a player feels less stress by displaying at least a letter image as compared with a state in which the player waits for the transmission of the server-side image even if the time-out time passes and no image is displayed during all that time. If the letter image is displayed, the player can be informed of at least meaning of the screen even if there is no other body image.

Although the description has been given to the example in which the terminal-side image is set to be the letter image and the server-side image is set to be the other body image in the embodiment, moreover, the present invention is not restricted thereto. For example, it is also possible to generate, as the terminal-side image, a background image having no motion in a serial moving image and to generate, as the server-side image, a game character image having a motion or the like.

In addition, the embodiment is only illustrative for concreteness to carry out the present invention and the technical scope of the present invention should not be thereby construed to be restrictive. In other words, the present invention can be carried out in various configurations without departing from the gist or main features thereof.

### EXPLANATION OF DESIGNATION

- 11: delivery request unit
- 12: terminal side image generation unit
- 13: server side image receipt unit
- 14: image synthesis unit
- 15: display control unit
- 16: decision unit
- 17: control unit
- 18: communication speed detection unit
- 19: record unit
- 20: data volume adjustment unit
- 21: delivery request receipt unit
- 22: server side image generation unit
- 23: server side image transmission unit
- 30: communication history storage unit
- 100: terminal
- 200: server

## Claims

1. An image generation system for performing a process for generating a display image to be displayed on a terminal by distribution through the terminal and a server and for synthesizing a terminal-side image generated on the terminal and a server-side image generated on the server in the terminal and displaying the synthesized image, the system comprising:
a decision unit for deciding whether the process for generating a display image is performed by distribution through the terminal and the server;
a control unit for controlling to execute either a distribution process for synthesizing the terminal-side image and the server-side image to generate the display image or a single process for generating the server-side image as the display image depending on a result of the decision made by the decision unit;
a communication history storage unit for storing, as a history, a communication speed in execution of the single process to transmit the server-side image from the server to the terminal; and
a data volume adjustment unit for adjusting a data volume of the server-side image based on the history of the communication speed stored in the transmission history storage unit when executing the distribution process to generate the server-side image.

2. The image generation system according to claim 1, wherein the data volume adjustment unit performs adjustment into such a data volume that a processing time required for transmitting the server-side image at the lowest one of the communication speeds stored in the communication history storage unit is within a predetermined time.

3. The image generation system according to claim 2, wherein the predetermined time is a predetermined time-out time for each type of the display image.

4. The image generation system according to claim 1, wherein the terminal-side image generated on the terminal in the execution of the distribution process is a letter image included in the display image, and the server-side image generated on the server in the execution of the distribution process is an image other than the letter image, and
the decision unit decides whether the process for generating a display image is performed by distribution through the terminal and the server depending on whether the letter image is included in the display image.

5. An image generation system for performing a process for generating a display image to be displayed on a terminal by distribution through the terminal and a server and for synthesizing and displaying a terminal-side image generated on the terminal and a server-side image generated on the server in the terminal,
wherein the terminal comprises:
a delivery request unit for requesting delivery of an image;
a terminal-side image generation unit for performing a process for generating the terminal-side image;
a server-side image receipt unit for receiving the server-side image;
an image synthesis unit for synthesizing the terminal-side image generated by the terminal-side image generation unit and the server-side image received by the server-side image receipt unit, thereby generating the display image;
a display control unit for displaying the display image;
a decision unit for deciding whether the process for generating a display image is performed by distribution through the terminal and the server;
a control unit for controlling to execute either a distribution process for operating the terminal-side image generation unit and the image synthesis unit to generate the display image or a single process for generating, as the display image, the server-side image received by the server-side image receipt unit without operating the terminal-side image generation unit and the image synthesis unit depending on a result of the decision made by the decision unit;
a communication speed detection unit for detecting a communication speed of a line for connecting the terminal and the server to each other;
a record unit for storing the communication speed detected by the communication speed detection unit as a history in a communication history storage unit when receiving the server-side image by the server-side image receipt unit in the execution of the single process; and
a data volume adjustment unit for adjusting a data volume of the server-side image based on the history of the communication speed stored in the communication history storage unit in the execution of the distribution process, and
the server comprises:
a delivery request receipt unit for receiving a delivery request of an image transmitted from the terminal;
a server-side image generation unit for performing a process for generating the server-side image so as to have a data volume adjusted by the data volume adjustment unit when receiving the delivery request by the delivery request receipt unit; and
a server-side image transmission unit for transmitting, to the terminal, the server-side image generated by the server-side image generation unit.

6. An image generation system for performing a process for generating a display image to be displayed on a terminal by distribution through the terminal and a server and for synthesizing and displaying a terminal-side image generated on the terminal and a server-side image generated on the server in the terminal,
wherein the terminal comprises:
a delivery request unit for requesting delivery of an image;
a terminal-side image generation unit for performing a process for generating the terminal-side image;
a server-side image receipt unit for receiving the server-side image;
an image synthesis unit for synthesizing the terminal-side image generated by the terminal-side image generation unit and the server-side image received by the server-side image receipt unit, thereby generating the display image;
a display control unit for displaying the display image;
a decision unit for deciding whether the process for generating a display image is performed by distribution through the terminal and the server; and
a control unit for controlling to execute either a distribution process for operating the terminal-side image generation unit and the image synthesis unit to generate the display image or a single process for generating, as the display image, the server-side image received by the server-side image receipt unit without operating the terminal-side image generation unit and the image synthesis unit depending on a result of the decision made by the decision unit, and
the server comprises:
a delivery request receipt unit for receiving a delivery request of an image transmitted from the terminal;
a server-side image generation unit for performing a process for generating the server-side image when receiving the delivery request by the delivery request receipt unit;
a server-side image transmission unit for transmitting, to the terminal, the server-side image generated by the server-side image generation unit;
a communication speed detection unit for detecting a communication speed of a line for connecting the terminal and the server to each other;
a record unit for storing the communication speed detected by the communication speed detection unit as a history in a communication history storage unit when transmitting the server-side image by the server-side image transmission unit in the execution of the single process; and
a data volume adjustment unit for adjusting a data volume of the server-side image based on the history of the communication speed stored in the communication history storage unit in the execution of the distribution process, and
the server-side image generation unit performs the process for generating the server-side image so as to have a data volume adjusted by the data volume adjustment unit when receiving the delivery request by the delivery request receipt unit.

7. An image generation system for performing a process for generating a display image to be displayed on a terminal by distribution through the terminal and a server and for synthesizing and displaying a terminal-side image generated on the terminal and a server-side image generated on the server in the terminal,
wherein the terminal comprises:
a delivery request unit for requesting delivery of an image;
a terminal-side image generation unit for performing a process for generating the terminal-side image;
a server-side image receipt unit for receiving the server-side image;
an image synthesis unit for synthesizing the terminal-side image generated by the terminal-side image generation unit and the server-side image received by the server-side image receipt unit, thereby generating the display image; and
a display control unit for displaying the display image, and
the server comprises:
a delivery request receipt unit for receiving a delivery request of an image transmitted from the terminal;
a server-side image generation unit for performing a process for generating the server-side image when receiving the delivery request by the delivery request receipt unit;
a server-side image transmission unit for transmitting, to the terminal, the server-side image generated by the server-side image generation unit;
a decision unit for deciding whether the process for generating a display image is performed by distribution through the terminal and the server;
a control unit for controlling to execute either a distribution process for generating the terminal-side image and the server-side image separately and synthesizing them by the image synthesis unit, thereby generating the display image or a single process for generating the display image by only the server-side image depending on a result of the decision made by the decision unit;
a communication speed detection unit for detecting a communication speed of a line for connecting the terminal and the server to each other;
a record unit for storing the communication speed detected by the communication speed detection unit as a history in a communication history storage unit when transmitting the server-side image by the server-side image transmission unit in the execution of the single process; and
a data volume adjustment unit for adjusting a data volume of the server-side image based on the history of the communication speed stored in the communication history storage unit in the execution of the distribution process, and
the server-side image generation unit performs the process for generating the server-side image so as to have a data volume adjusted by the data volume adjustment unit when receiving the delivery request by the delivery request receipt unit.

8. An image generation-purpose program to be applied to an image generation system for performing a process for generating a display image to be displayed on a terminal by distribution through the terminal and a server and for synthesizing a terminal-side image generated on the terminal and a server-side image generated on the server in the terminal and displaying the synthesized image, the program causing a computer to function as:
decision means for deciding whether the process for generating a display image is performed by distribution through the terminal and the server;
control means for controlling to execute either a distribution process for synthesizing the terminal-side image and the server-side image to generate the display image or a single process for generating the server-side image as the display image depending on a result of the decision made by the decision means;
record means for storing, as a history in a communication history storage unit, a communication speed in execution of the single process to transmit the server-side image from the server to the terminal; and
a data volume adjustment unit for adjusting a data volume of the server-side image based on the history of the communication speed stored in the transmission history storage unit when executing the distribution process to generate the server-side image.
